Europäisches Patentamt

European Patent Office

Office européen des brevets

(11) Publication number: **0 079 052**
**B1**

(12) **EUROPEAN PATENT SPECIFICATION**

(45) Date of publication of patent specification: **18.01.89**

(21) Application number: **82110162.3**

(22) Date of filing: **04.11.82**

(51) Int. Cl.⁴: **B 29 C 47/16**

(54) Method and apparatus for adjusting die clearance.

(30) Priority: **05.11.81 JP 177443/81**

(43) Date of publication of application:
**18.05.83 Bulletin 83/20**

(45) Publication of the grant of the patent:
**18.01.89 Bulletin 89/03**

(84) Designated Contracting States:
**DE FR GB IT**

(56) References cited:
**DE-A-1 779 546**
**US-A-3 307 215**
**US-A-3 940 221**
**US-A-4 124 342**
**US-A-4 125 350**

(73) Proprietor: **TOSHIBA KIKAI KABUSHIKI KAISHA**
**2-11, Ginza 4-Chome Chuo-ku**
**Tokyo-To (JP)**

(72) Inventor: **Iguchi, Katsuhiko**
**98-2, Chabatake**
**Susono-Shi Shizuoka-Ken (JP)**
Inventor: **Wakita, Ryuichi**
**4-10, Asahigaoka**
**Mishima-Shi Shizuoka-Ken (JP)**
Inventor: **Wada, Hidemi**
**935-35, Ohoka**
**Numazu-Shi Shizuoka-Ken (JP)**

(74) Representative: **Reichel, Wolfgang, Dipl.-Ing.**
**et al**
**Reichel und Reichel Parkstrasse 13**
**D-6000 Frankfurt am Main 1 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to a method and apparatus for adjusting die clearance for an extruder producing a sheet, film or coating on a magnetic record of a thermoplastic resin, cellulose, rubber and the like, paper, cellophane hopper or printing ink and the like corresponding to the first parts of claim 1 and claim 7. Such a method and apparatus is disclosed in US—A—4 124 342.

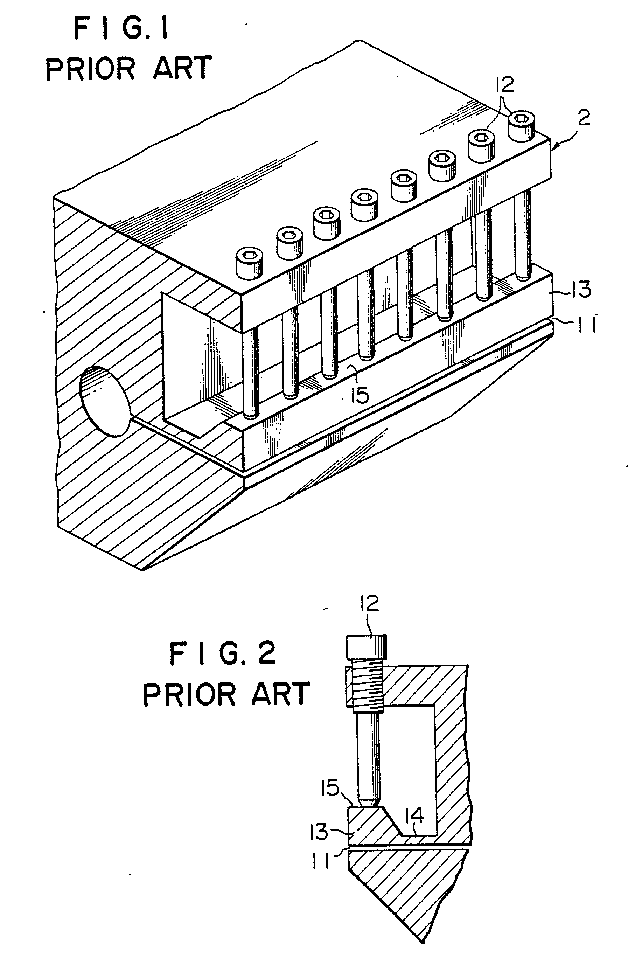

In a die device for molding a sheet or film of this kind (hereinafter referred to as the "sheet"), as shown in Figs. 1 and 2, the size of die clearance 11 is adjusted by pushing or pulling a plurality of bolts 12 disposed in the direction of width in order to change the pushing force acting upon a backface 15 of an upper die element 13 and to thereby adjust the degree of bending at a neck portion 14 of upper die element 13.

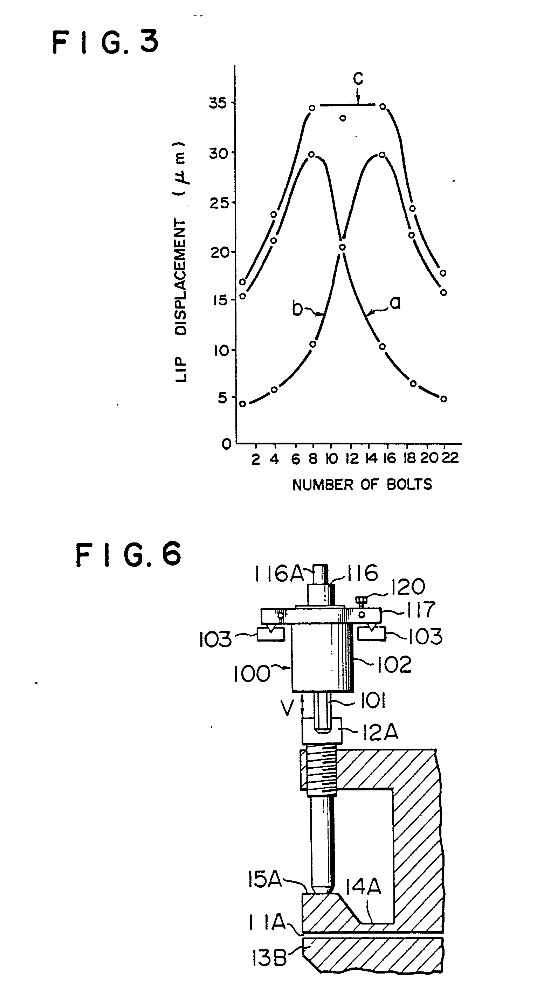

However, upper die element 13 is a continuous body and when a specified bolt is manipulated, the die clearance changes not only at the position where that specified bolt acts but also at the other portions. This phenomenon is referred to as the "mutual interference effect". Ideally, the effects should be additive according to the "principle of superposition". Unfortunately, they are not. Thus, as shown in Fig. 3, the lip deviation when only the eighth bolt of twenty-two adjusting bolts is manipulated (curve a) or when only the fifteenth bolt (curve b) is manipulated cannot be added to determine the deviation when both eighth and fifteenth bolts (curve c) are manipulated. Thus, at the position of the 8th bolt curve a is 30, curve b is 10 and curve c is 35, not 40.

The adjustment of die clearance has been mostly carried out empirically through manual work of an operator. Therefore, some difference for adjusting occurs from operator to operator, resulting in low accuracy of die clearance, time-consuming adjustment and danger in adjustement.

Further, the DE—A—1 779 546 already discloses an apparatus in which the thickness of a plate is measured at a plurality of positions corresponding to the positions of a plurality of bolts. In case of deviations of measured thickness values from a predetermined plate thickness a circuit station connected to the thickness measuring device controls a bolt driving means so as to compensate for this deviation by adjusting the corresponding bolt.

Further, it is known from the US—A—3 940 221 to adjust the clearance by presetting the opening of the die mechanically by means of a choker bar and by controlling the opening by means of individual heaters thermally influencing a metal rod which in turn acts upon the flexible upper lip of the die in order to compensate for deviations from a desired value of clearance.

Yet, neither the DE—A—1 779 546 nor the US—A—3 940 221 disclose a precise technical teaching with regard to the generation of compensating signals to apply to the bolt driving means or, respectively, to the heaters. Such a teaching, however, is essential, especially because of the phenomenon of the above described mutual interference effect, meaning that the displacing force applied to a die at a position affects the clearance or gap at another die position. Further, it is unclear, for example, in which way a quantity to be supplied to the heat voltage is supposed to be determined from the deviation of measured and desired thickness values. In any case, however, it is impossible to get good compensation signals without paying attention to the above phenomenon.

The apparatus, respectively method, described in the US—A—4 124 342 discloses the consideration of this phenomenon. In this apparatus a setting device of variable resistors which correspond to a number of adjusting bolts has to be sequentially manipulated by an operator to form a desired die clearance profile. The setting device is adjustable to simulate the setting of the transversely spaced bolts and is connected to a simulator. This simulator contains a corresponding number of fixed resistors used as weights for creating a pattern showing the distribution of the gap between the die lips. These constant weighting factors are to take into account the mutual influence of the bolts when adjustment of the bolts is carried out. However, these factors are determined under the assumption that the resulting patterns are the same with reference to each bolt so that these factors which are principally determined by a bolt located at a center position are applicable to any bolt position. Yet, the inventors of the present invention have found out that this assumption is not valid and that the displacement functions of the upper die lips with regard to the bolt positions are functions with different patterns for respective adjusted bolts. For this reason the above described electrical simulation system which has to be manually adjusted by trial and error method does not work exactly. Furthermore, it is unclear in which way the results of thickness measurements carried out for control purpose are to be incorporated in the above simulation system.

The object of the invention lies in providing apparatus and method for precisely and quickly producing the displacement quantities to be adjusted for each adjustment member, mounted on the dies, each adjusting member contacting to and acting on a backface of the die element in the direction of width across the sheet extruded out of the dies.

The apparatus, respectively method, of the invention includes a calculation of a desired displacement quantity δB for each adjusting member position taking into calculation the desirable thickness as well as mechanical values of the adjusting members and the exact relationships between acting forces and resulting displacement quantities. For this reason the calculated value represents all possible influences arising when adjusting the adjusting members and the value can be determined with a high degree of accuracy.

For this reason the additional measure of dividing the displacement quantity in a rough and a fine component is not only justified from a technical point of view but represents an advantageous application and implementation of the values thus determined. A standard deviation of less than 0.5% can be achieved.

The calculation, which is based on predetermined values, and the following production of displacement signals can be carried out quickly without relying on manipulations by the operator who only selects the desired thicknesses. It is possible to constitute a quick response system for reducing deviations of the actual thicknesses from their desired values.

Furthermore, the operator is completely free in selecting thickness values because the calculating means are able to process any desirable thickness profiles. Furthermore, the stability of the system does not depend on the profile of the sheet and is automatically maintained in any case.

When the forces, acting on the adjusting members, change the inventional apparatus, respectively method, fully compensates for the changes by taking into account the mechanical characteristics of the adjusting members in form of the spring constant according to Hook's Law.

The processing of the above predetermined values is carried out by solving multiple simultaneous linear equations the matrix coefficient factors of which are predetermined and stored in a memory and represent the relationships between each compensating incremental force value acting on each backface of a die element at each of a plurality of positions and the resultant desired values of displacement of the die element. The desired and measured thickness values are compared and a difference is obtained which is added to each incremental force value obtained by solving the above equations.

In this way the calculating means (process) "simulates" extremely precisely the relationships between displacement (or deformation) quantities of the upper die element in the direction of the die clearance (that is gap) and forces acting on the backface of the upper die element.

According to the preferred embodiment of the invention the figured out displacement quantity $\delta_{BI}$ to be adjusted is applied to a heating device (fine displacement signal), and a rotating device (rough displacement signal) of a bolt or combination thereof so that the displacement quantity of each bolt acting on the backface of the die element coincides with the quantity $\delta_{BI}$ which has been figured out.

In contrast to the above state of the art the inventional apparatus, respectively method works out concrete data which can be displayed or be printed out.

Ways of carrying out the invention are described in detail below by reference to the drawings which also show embodiments of the state of the art in which:

Figure 1 illustrates a perspective view showing a conventional die of the prior art;

Figure 2 illustrates a side view as viewed from an arrow Z in Figure 1;

Figure 3 illustrates a diagram showing the relation between adjusting bolts and lip displacement;

Figure 4 illustrates a block diagram showing an embodiment of the present invention;

Figure 5 illustrates a perspective view showing a die device and automatic rotating device of the embodiment of Figure 4;

Figure 6 illustrates a side view as viewed from an arrow Y in Figure 5;

Figure 7 illustrates a diagram showing how the deformation of the die as a whole is effected by adjusting one bolt;

Figure 8 illustrates another embodiment for adjusting die clearance;

Figure 9 illustrates a detailed block diagram of a calculation unit; and

Figure 10 illustrates a flow chart for explaining the operation of the calculation unit.

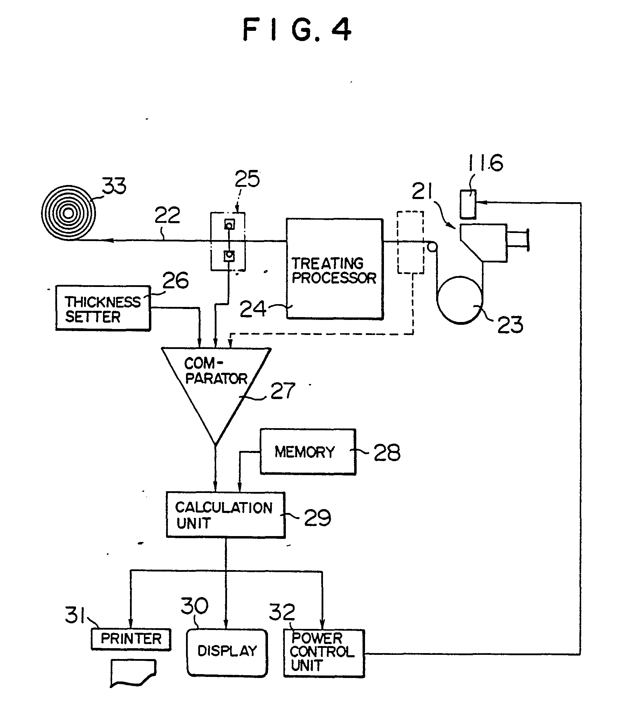

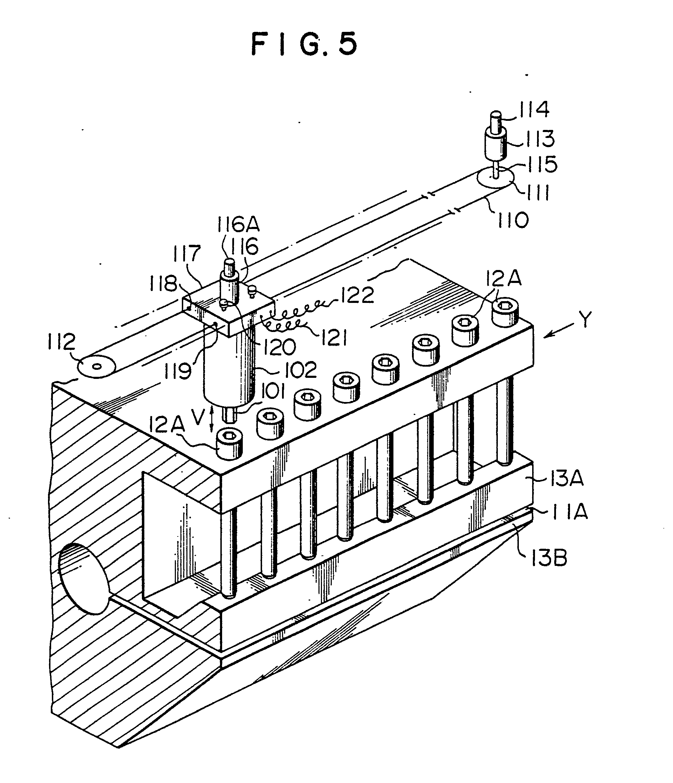

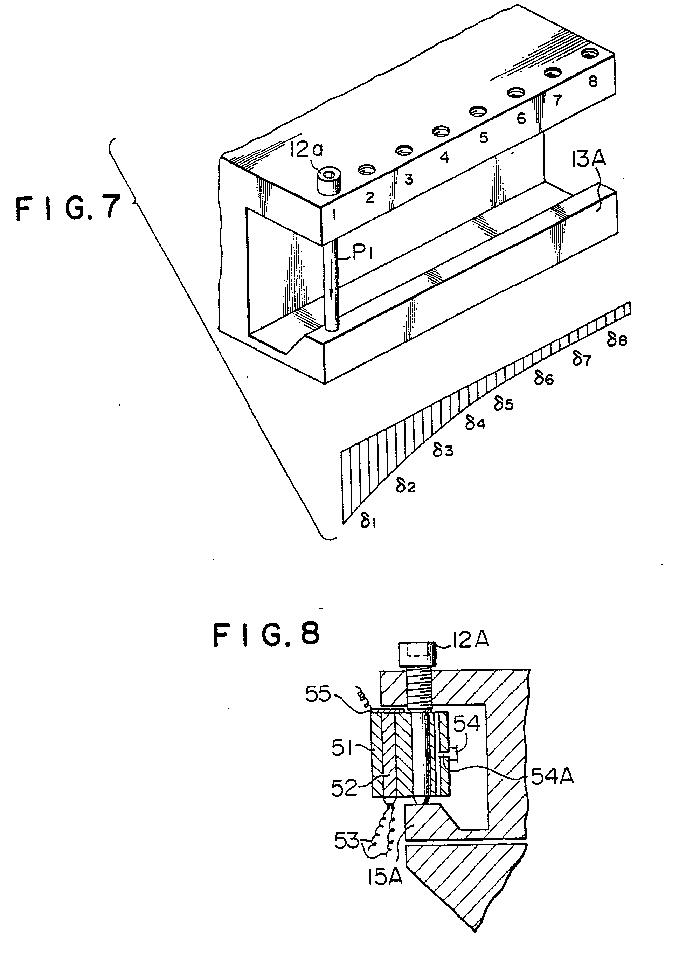

An embodiment of the present invention will be explained with reference to Figures 4, 5 and 6. In Figure 4, a die device 21 is mounted on an extruder (not shown) and has a lip portion 11A which is formed between an upper die element 13A and a lower die element 13B as shown in Figures 5 and 6.

The degree of opening at the lip portion, which forms the aforementioned die clearance, may be adjusted by adjusting bolts 12A each of which is rotated by a tool 101 rotatably mounted on an automatic rotating device 100. Device 100 is arranged so as to be movable along the direction in which adjusting bolts 12A extend and to stop at each adjusting bolt 12A. For this purpose, automatic rotating device 100 is slidably mounted on a guide rail 103.

A wire 110 between pulleys 111 and 112 extends through holes 118 and 119 of a plate 117 which supports member 102. Member 102 has a mechanism for transmitting rotation of motor 116 and effecting movement in the vertical direction. The wire is also attached to supporting plate 117 by screws 120.

Therefore, automatic rotating device 100 may be moved in the direction along which adjusting bolts 12A extend by rotating pulley 111 connected to a shaft 115 of a motor 113. A rotary encoder 114 produces a signal representing the position of automatically rotating device 100.

Through lead wires 121 and 122 connected to supporting plate 117 from a power control unit 32 shown in Figure 4 are applied control signals and electric power, respectively. The control signals control the rotation, which is measured by a resolver 116A, of a servo motor 116 which rotates tool 101. The control signals further control the position of tool 101 in the vertical direction. Tool 101 descends to a vertical position at which tool 101 fits into the hollow of the head portion of bolt 12A. Rotating device 100 is stopped at each adjusting bolt. Each numeral 11A, 12A, 13A, 14A and 15A designate elements corresponding to the elements of numerals 11, 12, 13, 14 and 15 shown in Figures 1 and 2.

Referring to Figure 4, a sheet 22 extruded out from lip portion 11A travels around a cooling roller 23 and a conventional treating processor 24 to a winder 33 where it is taken up by the winder. The thickness of sheet 22, after it is treated by processor 24, which may stretch sheet 22, is continuously measured by a measuring device 25 for example, using ß-rays. The sheet thicknesses measured by device 25 are compared by comparator 27 with the desirable values set by a manually operable thickness setter 26 for setting the sheet thicknesses at a plurality of predetermined positions in the direction of width of die device 21. Thus, comparator 27 determines the die clearance to be varied in accordance with the difference values between setting thickness and measured thickness at each position mentioned above. The die clearances to be varied as derived from comparator 27 are fed to a calculation unit 29 to which also data from a memory device 28 are fed.

The data stored in memory device 28 represent a group of coefficients relating displacement quantities and loads on each adjusting bolt 12A at each position mentioned above. Calculation unit 29 therefore calculates displacement quantities for each adjusting bolt 12A.

A display device 30 such as a cathode ray tube displays the displacement quantities calculated by calculation unit 29. Print-out is also possible if the output of calculation unit is fed to a printer 31. A power control unit 32 supplies signals to servo motor 116 to cause rotation until the measured displacements of bolts 12A reach those calculated by calculation unit 29.

Having the above-described construction, the apparatus of the present invention operates in the following manner. It will now be assumed that in Figure 7, when a bolt load $P_1$ is applied only to the first bolt 12a of eight adjusting bolts, the deformation of the die exhibits a displacement quantity $\delta_1$, $\delta_2$, ... $\delta_8$ at each of the predetermined positions. Thus,

$$\delta_1 = f_{1,1}P_1 \qquad (1)$$

where $f_{1,1}$ is a coefficient of the die clearance at the first position with respect to the load onto first bolt 12a.

Generally, the displacement quantity $\delta_1$ is given by:

$$\delta_1 = f_{1,J}P_J \ (J=1, 2, 3, ... n) \qquad (2)$$

The constant $f_{1,J}$ represents a matrix of coefficients inherent to each die device and can be obtained theoretically or experimentally. The matrix of coefficients are stored in advance in memory 28.

The desirable sheet thickness $E_1$ at each of the plural predetermined positions is set into setter 26. Comparator 27 compares this set value with the measured value $EM_1$ given from measuring device 25 and calculates the displacement quantity $\Delta B_1$ of the die clearance to be varied by each adjusting bolt from the difference between the set value and the measured value, as $e_1$ (I=1, 2, ... n). If the displacement quantity of each load onto the bolt required for obtaining each $e_1$ is expressed as $\Delta P_J$ (J=1, 2, ...n), the relationship between $\Delta P_J$ and $e_1$ is given as follows by using the coefficient $f_{1,J}$ stored in memory device 28.

$$e_1 = \sum_{J=1}^{n} f_{1,J} \cdot \Delta P_J \ (I=1, 2, 3, ... n) \qquad (3)$$

Namely,

$$e_1 = f_{1,1}\Delta P_1 + f_{1,2}\Delta P_2 + f_{1,3}\Delta P_3 + ... + f_{1,n}\Delta P_n$$

$$e_2 = f_{2,1}\Delta P_1 + f_{2,2}\Delta P_2 + f_{2,3}\Delta P_3 + ... + f_{2,n}\Delta P_n$$

$$e_3 = f_{3,1}\Delta P_1 + f_{3,2}\Delta P_2 + f_{3,3}\Delta P_3 + ... + f_{3,n}\Delta P_n$$

In other words, multiple simultaneous linear equations are solved for $\Delta P_J$ by GAUSE-SEIDEL method or asymptotic method, for example. The displacement quantity for each bolt, $\delta B_1$, is given by the following Equation (4) in consideration of the bolt's deformation by compressing.

$$\delta B_1 = e_1 + \frac{\Delta P_1}{k} (I=1, 2, 3, ... n) \qquad (4)$$

where k is a spring constant of the bolt.

The bolt displacement quantity $\delta B_1$ is determined in the abovementioned manner and it is applied from the calculation unit 29 to display 30 using the CRT or to printer 31. It is also applied to power control unit 32 to achieve the predetermined die clearance. In this manner, the drawbacks described above can be eliminated.

In addition to Figure 4, it may also be possible that measuring device 25 is located just after cooling roller 23 as shown with broken lines.

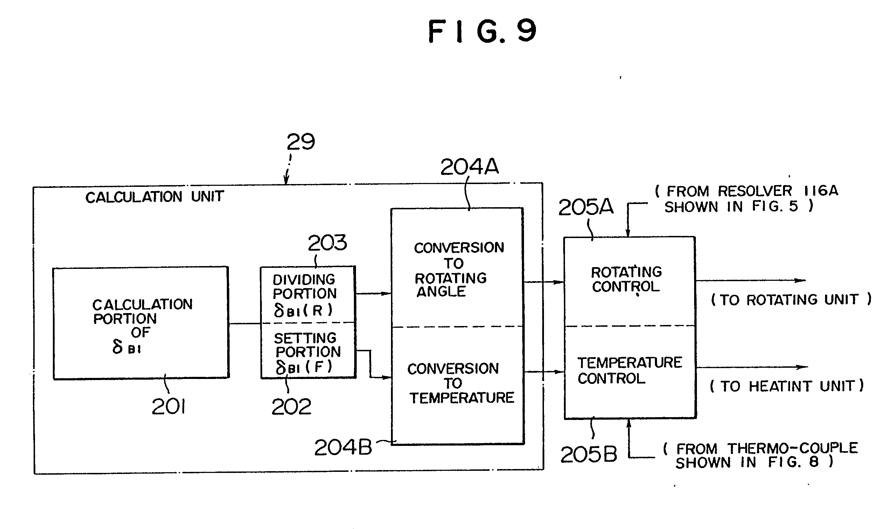

Furthermore, Figure 8 shows another way to provide fine displacement in the direction of die clearance to upper lip 15A by heating adjusting bolt 12A. In Figure 8, holder 51 mounting bolt 12A is provided with an elongated heating unit 52 parallel with bolt 12A, so that bolt 12A can be heated through holder 51 by heating unit 52. Electric current is applied through a wire 53, which is connected to power control unit 32 as shown in Figure 4. Holder 51 is also provided with an inlet 54 and an out flow passage 54A for cooling fluid, for example, air at low temperature. This permits quick response to the desired thermal displacement of bolt 12A. Holder 51 is also provided with a thermo-couple 55 for measuring the temperature of the portion adjacent bolt 12A. In this embodiment, calculation unit 29 calculates a desirable temperature $\theta_1$ for each bolt, which corresponds to the displacement quantity $\delta B_1$ mentioned above.

Figure 9 illustrates a block diagram for explaining the details of calculation unit 29 and power control unit 32 shown in Figure 4. More specifically, Figure 9 illustrates a combination for rotating and heating bolt 12A shown in Figure 5 and Figure 8, respectively.

In Figure 9, calculation unit 29 has a calculation portion 201 which calculates the displacement quantity $\Delta B_l$ at each position of bolt 12, a setting portion 202 on which is set a value "m" corresponding to the value of minimum resolution of servomotor 116 shown in Figure 5, and a dividing portion 203 which divides the displacement quantity $\Delta B_l$ into the rough value "$\delta B_l(R)$" and the fine value "$\delta B_l(F)$", as shown in Figure 9, where R stands for rough and F for fine. An integer N is selected according to the following expressions.

$$\delta B_l(R)=N \cdot m$$

$$\delta B_l(F)=\delta B_l-\delta B_l(R)<m$$

Calculation unit 29 also includes rotating angle conversion portion 204A and temperature conversion portion 204B. Portion 204A converts the value "$N \cdot m$" to a rotation angle for servo motor 116 and portion 204B converts the value "$\delta B_l(F)$" to a temperature value corresponding thereto. Power control unit 32 has rotating control portion 205A and temperature control portion 205B, to which are applied feedback signals from resolver 116A and thermo couple 55, respectively.

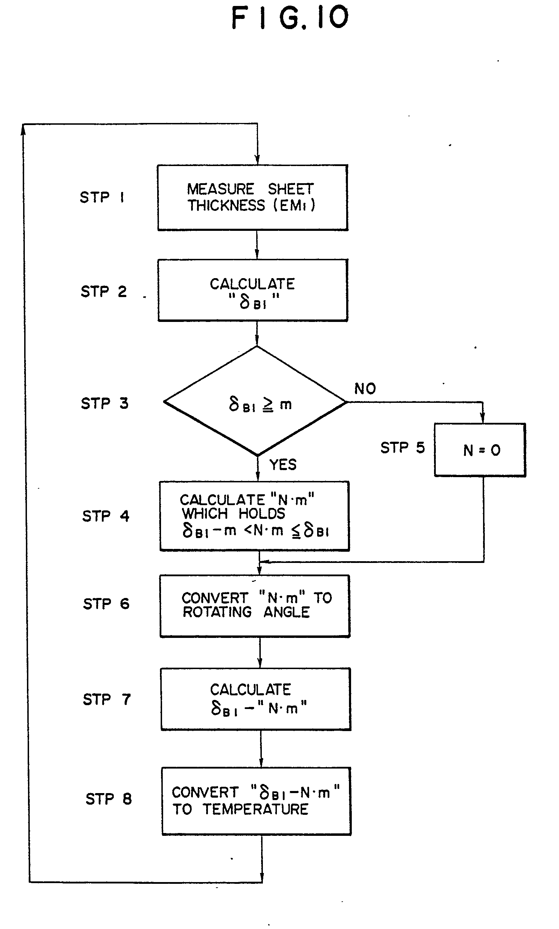

Figure 10 ilustrates a flow chart showing the process of execution in calculation unit 29. In Figure 10, step 1 of the process shows the measuring of sheet thickness $EM_l$ at the each measuring position. Step 2 shows the calculating of displacement quantity $\delta B_l$. At step 3, it is checked whether the value "$\delta B_l$" is larger than or equal to "m" or not.

When "$\delta B_l$" is larger than or equal to "m" at step 3, the value $N \cdot m$ is calculated at step 4 where "N" is an integer and the following expression results:

$$\delta B_l-m<N \cdot m \leq \delta B_l$$

When "$\delta B_l$" is smaller than "m" at step 3, the value of "N" is set as zero at step 5.

At step 6, the calculated value "$N \cdot m$" is converted to the rotating angle of servo motor 116.

At step 7, the remaining value "$\delta B_l(F)$" (which equals to "$\delta B_l-N \cdot m$") is determined, and at step 8, the value "$\delta B_l(F)$" is converted to the value of the temperature of bolt 12A for producing thermal displacement of the bolt. By using the combination of rotating and heating the bolt as shown in Figure 9 and Figure 10, it is possible to minimize the electric power required for heating the bolt. Furthermore, it is possible to constitute a quick response system for reducing the difference $e_l$ between the desirable value $E_l$ and measured value $EM_l$ at each position.

It is to be understood that the invention is not limited in its application to the details of construction and arrangement of parts illustrated in the accompanying drawings since the invention is capable of other embodiments and of being practiced or carried out in various ways.

## Claims

1. Apparatus for adjusting the clearance between an upper die (13A) and a lower die (13B) for an extruder producing a sheet (22) with a plurality of adjusting members (12A) acting on a backface of one of said die elements at each of a plurality of positions across the width of said sheet for adjusting the clearance, comprising

measuring means (25) for measuring the thickness of said sheet at a plurality of positions in the direction of width of said sheet;

means (26) for setting desirable thicknesses at said positions; and

means (27 to 30, 32, 51 to 54, 54A, 55, 101, 102, 116, 116A) for controlling the adjustment of each of said members taking into consideration said thickness measurements and the effect of mutual influence of member adjustment operations, characterized in that said means for controlling the adjustment of each of said members comprise:

means (27) for comparing the measured thicknesses with the desirable thicknesses and producing a signal indicating the difference ($e_l$) et each position "l";

means (28) for storing the values of spring constant (K) of said adjusting member (12A) and a plurality of matrix data ($f_{l,j}$) defined as coefficient factors of multiple simultaneous linear equations representing the relationships between each compensating incremental force value $\Delta P_1$, $\Delta P_2$, $\Delta P_3$ ... $\Delta P_n$) acting on each backface at each of said positions and the resultant desired values of displacement of the die element of the position "l" exerted by said each compensating incremental force value $\Delta P$;

calculation means (29) for determining each said compensating increment of forces $\Delta P_l$ by simultaneous solving of said equations by using said stored coefficcsnt factors ($f_{l,j}$) and said differences ($e_l$), and for determining the displacement quantities of $\delta B_l$ for each adjusting member at each position "l" by adding said values ($e_l$) to $\Delta P_l$, and for producing rough member displacement signals $\delta B_l(R)$ and fine member displacement signals $\delta B_l(F)$ such that

$$\delta B_l=\delta B_l(R)+\delta B_l(F);$$

means (101, 102, 116, 116A) mounted adjacent said members for receiving said rough member displacement signals $\delta B_l(R)$ and mechanically tightening or loosening each member in accordance with the associated $\delta B(R)$ signal; and

means (51, 52, 54, 54A, 55) adjacent each said members for receiving said fine member displacement signal $\delta B_l(F)$ associated with the adjacent member and heating the adjacent member in accordance with the received signal $\delta B(F)$.

2. Apparatus according to claim 1, wherein said means for effecting said rough displacement δB(R) includes a rotating device (101, 102, 116, 116A) for rotating said adjusting member (12A), which is a bolt, to vary the pushing force on the upper die (13A).

3. Apparatus according to claim 2, wherein said means for effecting said fine displacement δB(F) includes means for heating (51, 52, 54, 52A, 55) said bolt (12A) to vary the pushing force on the upper die (13A).

4. Apparatus according to claim 1, wherein said control means includes a printer (31) for printing out said data from said producing means.

5. Apparatus according to claim 1, wherein said control means includes a display unit (30) for displaying said data from said producing means.

6. Apparatus according to claim 1, wherein said control means includes power control means (32) for applying the signal corresponding to the quantities (δBl) to said means receiving said fine and rough displacement signals so that said measured thickness at said each position coincides with said desirable thicknesses which are stored.

7. Method for adjusting die clearance between an upper die and a lower die for an extruder producing a sheet which method comprises the steps of:

adjusting a plurality of adjusting members acting on a backface of one of said die elements at each of a plurality of positions across the width of said sheet,

measuring the thickness of said sheet at a plurality of positions in the direction of width of said sheet;

setting desirable thicknesses at said positions; and

adjusting each of said members taking into consideration said thickness measurement and the effect of mutual influence of member adjusting operations;

characterized by the steps of storing the desirable thicknesses of the sheet for each position in the direction of width across the sheet;

storing the values of the spring constant (K) of said adjusting member and storing a plurality of matrix data ($F_{IJ}$) defined as coefficient factors of multiple simultaneous linear equations representing the relationships between each compensating incremental force value ($\Delta P_1$, $\Delta P_2$, $\Delta P_3$, ..., $\Delta P_n$) acting on each backface at each of said positions and the resultant desired values of displacement of the die element of the position "I" exerted by said each compensating incremental force value $\Delta P$, and

comparing the measured thicknesses with the desirable stored thicknesses and producing a signal indicating the difference ($e_i$) et each position "I" in said direction;

calculating each said compensating increment of forces $\Delta P_I$ by simultaneous solving of said equations by using said stored coefficient factors ($F_{IJ}$) and said differences ($e_i$), and determining said displacement quantities of δBI for each adjusting member at each position "I" by adding said difference ($e_i$) to a value $\Delta P_I/K$; and

producing a rough member displacement signal δB(R) and a fine member displacement signal δB(F) such that

$$\delta B = \delta B(R) + \delta B(F)$$

and applying these signals δB(R) and δB(F) to means for applying force to said adjusting members.

**Patentansprüche**

1. Gerät zur Einstellung der Schlitzdicke zwischen einem oberen Düsenelement (13A) und einem unteren Düsenelement (13B) für einen eine Folie (22) produzierenden Extruder mit mehreren Einstellgliedern (12A), die zur Einstellung der Schlitzdicke an jeder mehrerer Positionen über die Breite der Folie auf eine Rückseite eines dieser Düsenelemente wirken, aufweisend:

eine Meßeinrichtung (25) zum Messen der Dicke der Folie an mehreren Positionen in Richtung der Folienbreite;

eine Einrichtung (26) zum Einstellen gewünschter Dicken an diesen Positionen; und

Einrichtungen (27 bis 30, 32, 51 bis 54, 54A, 55, 101, 102, 116, 116A) zum Steuern der Einstellung jedes dieser Glieder unter Berücksichtigung der Dickenmessungen und des Effekts der gegenseitigen Beeinflussung bei Gliedeinstelloperationen,

dadurch gekennzeichnet,

daß die Einrichtungen zum Steuern der Einstellung jedes dieser Glieder umfassen:

eine Einrichtung (27) zum Vergleichen der gemessenen Dicken mit den gewünschten Dicken und zum Erzeugen eines die Differenz ($e_i$) an jeder Position "I" anzeigenden Signals;

eine Einrichtung (28) zum Speichern der Federkonstantenwerte (K) des Einstellgliedes (12A) und einer Vielzahl von Matrixdaten ($f_{IJ}$), die als Koeffizientenfaktoren multipler simultaner, linearer Gleichungen definiert sind, die die Beziehungen zwischen jedem kompensierenden inkrementellen Kraftwert ($\Delta P_1$, $\Delta P_2$, $\Delta P_3$, ... $\Delta n$), der bei jeder dieser Positionen auf jede Rückseite wirkt, und den resultierenden gewünschten Verstellwerten des Düsenelements der Position "I", ausgeübt von jedem solchen kompensierenden inkrementellen Kraftwert $\Delta P$, repräsentieren;

eine Kalkulationseinrichtung (29) zum Bestimmen jedes solchen kompensierenden Kräfteinkrements $\Delta P_I$ durch simultanes Lösen dieser Gleichungen unter Verwendung der gespeicherten Koeffizientenfaktoren ($f_{IJ}$) und der Differenzen ($e_i$) und zum Bestimmen der Verstellgrößen δB_I für jedes Einstellglied an jeder Position "I" durch Hinzuaddieren der Werte ($e_i$) zu $\Delta P_I$ und zum Erzeugen von Gliedgrobverstellsignalen δB_I(R) und Gliedfeinverstellsignalen δB_I(F) derart, daß δB_I=δB_I(R)+δB_I(F);

Einrichtungen (101, 102, 116, 116A), die nahe bei den Gliedern angebracht werden, die Glied-

grobverstellsignale δB₁(R) empfangen und jedes Glied in Übereinstimmung mit dem zugehörigen δB(R)-Signal mechanisch anziehen oder lockern; und

Einrichtungen (51, 52, 54, 54A, 55) nahe bei jedem der Glieder, die das dem nahegelegenen Glied zugehörige Gliedfeinverstellsignal δB₁(F) empfangen und das nahegelegene Glied in Übereinstimmung mit dem empfangenen Signal δB(F) erwärmen.

2. Gerät nach Anspruch 1, in welchem die Einrichtungen zum Bewirken der Grobverstellung δB(R) eine Rotationsvorrichtung (101, 102, 116, 116A) zur Rotation des Einstellglieds (12A) aufweisen, das ein Schraubbolzen ist, um die Schubkraft auf das obere Düsenelement (13A) zu variieren.

3. Gerät nach Anspruch 2, in welchem die Einrichtungen zum Bewirken der Feinverstellung δB(F) Einrichtungen zum Erwärmen (51, 52, 54, 52A, 55) des Schraubbolzens (12A) aufweisen, um die Schubkraft auf das obere Düsenelement (13A) zu variieren.

4. Gerät nach Anspruch 1, in welchem die Steuereinrichtungen einen Drucker (31) zum Ausdrucken der Daten von der Produktionseinrichtung aufweisen.

5. Gerät nach Anspruch 1, in welchem die Steuereinrichtungen eine Display-Einheit (30) zum Darstellen der Daten von der Produktionseinrichtung aufweisen.

6. Gerät nach Anspruch 1, in welchem die Steuereinrichtungen Leistungssteuereinrichtungen (32) aufweisen, um das den Größen (δBl) entsprechende Signal den Einrightungen, die die Fein und Grobverstellsignale empfangen, derart zuzuführen, das die gemessene Dicke bei jeder Position mit den gewünschten Dicken, die gespeichert sind, übereinstimmt.

7. Verfahren zur Einstellung der Schlitzdicke zwischen einem oberen Düsenelement und einem unteren Düsenelement für einen eine Folie produzierenden Extruder, welches Verfahren die Schritte aufweist:

Einstellen mehrerer Einstellglieder, die bei jeder mehrerer Positionen über die Breite der Folie auf eine Rückseite eines dieser Düsenelemente wirken,

Messen der Dicke der Folie bei mehreren Positionen in Richtung der Folienbreite;

Festsetzen gewünschter Dicken bei diesen Positionen; und

Einstellen jedes der Glieder unter Berücksichtigung der Dickenmessung und des Effekts der gegenseitigen Beeinflussung bei Gliedeinstelloperationen;

gekennzeichnet durch die Schritte des Speicherns der gewünschten Dicken der Folie für jede Position in der Richtung der Breite über die Folie; des Speicherns der Werte der Federkonstanten (K) dieses Einstellglieds und des Speicherns einer Vielzahl von Matrixdaten (F₁J), die als Koeffizientenfaktoren multiplier simultaner, linearer Gleichungen definiert sind, die die Beziehungen zwischen jedem kompensierenden inkrementellen Kraftwert (ΔP₁, ΔP₂, ΔP₃, ..., ΔPₙ), der bei jeder dieser Positionen auf jede Rückseite wirkt, und den resultierenden gewünschten Verstellwerten des Düsenelements der Position "I", ausgeübt von jedem solchen kompensierenden inkrementellen Kraftwert ΔP, repräsentieren, und

des Vergleichens der gemessenen Dicken mit den gewünschten gespeicherten Dicken und des Erzeugens eines Signals, das die Differenz (e₁) bei jeder Position "I" in dieser Richtung anzeigt;

des Berechnens jeder der kompensierenden Kräfteinkremente ΔP₁ durch simultanes Lösen der Gleichungen unter Verwendung der gespeicherten Koeffizientenfaktoren (F₁J) und der Differenzen (e₁), und des Bestimmens der Verstellgrößen δB₁ für jedes Einstellglied bei jeder Position "I" durch Hinzuaddieren der Differenz (e₁) zu einem Wert ΔP₁/K; und

des Erzeugens eines Gliedgrobverstellsignals δB(R) und eines Gliedfeinverstellsignals δB(F) derart, daß

$$\delta B = \delta B(R) + \delta B(F)$$

und des Zuführens dieser Signale δB(R) und δB(F) zu Einrichtungen, die die Einstellglieder mit Kraft beaufschlagen.

**Revendications**

1. Dispositif pour régler la largeur de fente entre un élément supérieur de filière (13A) et un élément inférieur de filière (13B) pour un extrudeuse qui produit une feuille (22), au moyen d'une pluralité d'organes de réglage (12A) qui agissent sur la face arrière de l'un desdits éléments de la filière, chacun à chacune d'une pluralité de positions réparties sur la largeur de ladite feuille pour régler la largeur de fente, dispositif du type comprenant:

des moyens de mesure (25) servant à mesurer l'épaisseur de la feuille en une pluralité de positions réparties dans la direction de la largeur de ladite feuille;

des moyens (26) servant à fixer les épaisseurs voulues auxdites positions; et

des moyens (27 à 30, 32, 51 6 54, 54A, 55, 101, 102, 116, 116A) servant à commander le réglage de chacun desdits organes, en prenant en considération les mesures d'épaisseur et l'effet d'influence mutuelle des opérations de réglage des organes,

caractérisé en ce que lesdits moyens servant à commander le réglage de chacun desdits organes comprennent:

des moyens (27) servant à comparer les épaisseurs mesurées aux épaisseurs voulues et à produire un signal indiquant la différence (e₁) à chaque position (I);

des moyens (28) servant à mémoriser les valeurs de la constante élastique (k) dudit organe de réglage (12A) et une pluralité de données groupées en matrice (f₁J) constituant les coefficients des équations linéaires simultanées multiples qui représentent les relations entre chaque valeur de force incrémentale compensatrice ($\Delta P_1$, $\Delta P_2$, $\Delta P_3$, ... $\Delta P_n$) qui agissent sur la face arrière à chacune desdites positions et les valeurs désirées résultantes du déplacement de l'élément de filière à la position (I), qui résulte de l'action de chaque valeur de force incrémentale compensatrice ($\Delta P$);

des moyens de calcul (29) servant à déterminer chaque incrément de force compensatrice $\Delta P_I$ et résolvant simultanément lesdits équations avec utilisation desdits coefficients mémorisés ($f_{IJ}$) et desdites différences ($e_I$) et à déterminer l'amplitude de déplacement de $\delta B_I$ pour chaque organe de réglage à chaque position (I) en ajoutant lesdites valeurs ($e_I$) à $\Delta P_I$, afin de produire des signaux de déplacement approché des organes $\delta B_I(R)$ et des signaux de déplacement fin des organes $\delta B_I(F)$ de telle manière qu'on ait

$$\delta B_I = \delta B_I(R) + \delta B_I(F);$$

des moyens (101, 102, 116, 116A) adjacents auxdits organes pour recevoir lesdits signaux de déplacement approché des organes ($\delta B_I(R)$ et pour serrer ou desserrer mécaniquement chaque organe en fonction du signal $\delta B_I(R)$ correspondant, et

des moyens (51, 52, 54, 54A, 55) adjacents à chacun desdits organes pour recevoir ledit signal de déplacement fin de l'organe $\delta B_I(F)$ associé à l'organe adjacent et pour chauffer cet organe adjacent en fonction du signal $\delta B_I(F)$ reçu.

2. Dispositif selon la revendication 1, caractérisé en ce que lesdits moyens servant à effectuer ledit déplacement approché $\delta B_I(R)$ comprend un dispositif de rotation (101, 102, 116, 116A) servant à faire tourner ledit organe de réglage (13A) qui est une vis, pour faire varier la force de poussée exercée sur la filière supérieure (13A).

3. Dispositif selon la revendication 2, caractérisé en ce que lesdits moyens servant à effectuer ledit déplacement fin $\delta B_I(F)$ comprennent des moyens servant à chauffer (51, 52, 54, 52A, 55) ladite vis (12A) pour faire varier la force de poussée exercée sur la filière supérieure (13A).

4. Dispositif selon la revendication 1, caractérisé en ce que lesdits moyens de commande comprennent une imprimante (31) servant à imprimer lesdites données fournies par lesdits moyens de production.

5. Dispositif selon la revendication 1, caractérisé en ce que lesdits moyens de commande comprennent une unité d'affichage (30) servant à afficher lesdits données fournies par lesdits moyens de production.

6. Dispositif selon la revendication 1, caractérisé en ce que lesdits moyens de commande comprennent des moyens d'alimentation et de commande (32) servant à appliquer le signal qui correspond aux amplitudes $\delta B_I$ auxdits moyens qui reçoivent lesdits signaux de déplacement fin et de déplacement approché, de manière que ladite épaisseur mesurée à chacune desdites positions coïncident avec ladite épaisseur souhaitée qui est mémorisée.

7. Procédé pour régler la largeur de fente d'une filière, comprise entre un élément supérieur de la filière et un élément inférieur de la filière, pour une extrudeuse qui produit une feuille, lequel procédé est du type comprenant les phases consistant à:

régler une pluralité d'organes de réglage qui agissent sur la face arrière de l'un desdits éléments de la filière, à chacune d'une pluralité de positions réparties sur la largeur de ladite feuille,

mesurer l'épaisseur de ladite feuille en une pluralité de positions réparties dans la direction de la largeur de ladite feuille,

fixer des épaisseurs voulues auxdites positions; et

régler chacun desdits organes en prenant en considérations ladite mesure de l'épaisseur et l'effet d'influence mutuelle des opérations de réglage des organes;

caractérisé par les phases consistant à mémoriser les épaisseurs voulues de la feuille pour toutes les positions réparties dans la direction de la largeur de la feuille;

mémoriser les valeurs de la constante élastique (k) dudit organe de réglage et mémoriser une pluralité de données matricielles ($F_{IJ}$) constituant les coefficients d'équations linéaires simultanées multiples qui représentent les relations entre chaque valeur de force incrémentale compensatrice ($\Delta P_1$, $\Delta P_2$, $\Delta P_3$, ... $\Delta P_n$) agissant sur la face arrière dans chacune desdites positions, et lesdites valeurs voulues et résistantes de déplacement de l'élément de filière de la position (I), qui résulte de l'action de chaque valeur de force incrémentale compensatrice ($\Delta P$, et

comparer les épaisseurs mesurées aux épaisseurs mémorisées voulues et produire un signal indiquant la différence ($e_I$) a chaque position (I) dans ladite direction;

calculer chaque incrément de force compensatrice $\Delta P$ en résolvant simultanément lesdites équations avec utilisation desdits coefficients mémorisés ($F_{IJ}$) et desdites différences ($e_I$), et déterminer ladite amplitude de déplacement $\delta B_I$ pour chaque organe de réglage à chaque position (I) en ajoutant ladite différence ($e_I$) à une valeur $\Delta P_I/K$; et

produire un signal de déplacement approché de l'organe $\delta B(R)$ et un signal de déplacement fin de l'organe $\delta B(F)$ tels que

$$\delta B = \delta B(R) + \delta B(F)$$

et appliquer ces signaux $\delta B(R)$ et $\delta B(F)$ à des moyens servant à appliquer une force auxdits organes de réglage.

# F I G. I
## PRIOR ART

# F I G. 2
## PRIOR ART

# F I G. 3

NUMBER OF BOLTS

# F I G. 6

2

# F I G. 4

33

25

22

116

21

THICKNESS SETTER 26

TREATING PROCESSOR

24

23

COM-PARATOR 27

MEMORY 28

CALCULATION UNIT 29

31 PRINTER

30 DISPLAY

32 POWER CONTROL UNIT

3

# FIG. 5

FIG. 7

FIG. 8

# FIG. 9

CALCULATION UNIT — 29

- CALCULATION PORTION OF $\delta_{B1}$ — 201
- DIVIDING PORTION $\delta_{B1}(R)$ — 203
- SETTING PORTION $\delta_{B1}(F)$ — 202
- CONVERSION TO ROTATING ANGLE — 204A
- CONVERSION TO TEMPERATURE — 204B
- ROTATING CONTROL — 205A (FROM RESOLVER 116A SHOWN IN FIG. 5) (TO ROTATING UNIT)
- TEMPERATURE CONTROL — 205B (FROM THERMO-COUPLE SHOWN IN FIG. 8) (TO HEATINT UNIT)

EP 0 079 052 B1

# F I G. 10

| | |
|---|---|
| STP 1 | MEASURE SHEET THICKNESS (EM$_1$) |
| STP 2 | CALCULATE "$\delta_{B1}$" |
| STP 3 | $\delta_{B1} \geqq m$ |
| STP 5 | N = O |
| STP 4 | CALCULATE "N·m" WHICH HOLDS $\delta_{B1} - m < N·m \leqq \delta_{B1}$ |
| STP 6 | CONVERT "N·m" TO ROTATING ANGLE |
| STP 7 | CALCULATE $\delta_{B1} - $"N·m" |
| STP 8 | CONVERT "$\delta_{B1} - N·m$" TO TEMPERATURE |

NO

YES